# EUROPÄISCHE PATENTANMELDUNG

(11) **EP 2 105 421 A1**
(43) Veröffentlichungstag der Anmeldung: **30.09.2009**
(21) Anmeldenummer: 09155498.0
(22) Anmeldetag: 18.03.2009
(51) Int. Cl.: C04B 35/10, C04B 38/02

(54) **Porenkeramik**

(30) Priorität: 20.03.2008 DE 102008015271
(71) Anmelder: Rauschert Heinersdorf-Pressig GmbH, 96332 Pressig (DE)
(72) Erfinder: Jüttner, Thomas, 96155 Buttenheim (DE); Mörtel, Heinrich, 91096 Möhrendorf (DE); Svinka, Visvaldis, 1004 Riga (LV)
(74) Vertreter: Sandmann, Wolfgang

(57) **Zusammenfassung**

Die Erfindung betrifft ein keramisches Material basierend auf Tonerde in γ-Al₂O₃ Form, ein Verfahren zu dessen Herstellung und dessen Verwendung zur Herstellung von feuerfesten Materialien, feuerfesten Formteilen, Brennhilfsmittel, Katalysatorträgern und Filtermaterialien.

## Beschreibung

Die Erfindung betrifft ein keramisches Material, ein Verfahren zu dessen Herstellung und dessen Verwendung zur Herstellung von feuerfesten Materialien, feuerfesten Formteilen, Brennhilfsmittel, Katalysatorträgern und Filtermaterialien.

Im Bereich Schaumkeramik sind Polymer-abgeleitete Keramikschäume bekannt, in denen neben dem Polymer anorganische Füller eingesetzt werden. Durch Schaumbildung von Polymeren und im Weiteren Infiltrieren mit anorganischen Stoffen werden offenzellige Schaumkeramiken hergestellt. Ein Nachteil dieser Technologie ist, dass zur Herstellung der Keramik ein Ausbrennen organischer Stoffe oder Pyrolyse in Luft oder Inert- oder gar Stickstoff-Atmosphäre notwendig ist und ein solches Fertigungsverfahren kompliziert und teuer ist. Die Porenstruktur der gebrannten Keramiken wird von der Schaumstruktur der Polymerschäume oder von der Korngrößenverteilung des auszubrennenden organischen Stoffes begrenzt.

Beim herkömmlichen Porosierungsprozess von leichten feuerfesten Steinen werden auch Porenraum-haltende organische Zusatzstoffe (Platzhalter) eingesetzt und dadurch Umweltprobleme beim Ausbrennen verursacht. Außerdem tragen die ausbrennbaren Komponenten kaum zur Kontakt-Bildung zwischen den Teilchen der anorganischen Hauptkomponenten bei. Die durch Ausbrennen organischer Schaumbilder oder organischer Zusätze erzeugten Materialien weisen daher sowohl eine geringere Kaltdruckfestigkeit, als auch nur begrenzte Anwendungstemperaturen auf.

Es ist ferner die Bildung von Schaumkeramiken durch direkte Schäumung einer Suspension bekannt. Für die Aufschäumung werden anorganische Stoffe wie Peroxide, Ammoniumhydrogencarbonate, Silane etc. eingesetzt, die bei leicht erhöhter Temperatur zu Gas bildenden Reaktionen kommen. Der Nachteil dieses Verfahrens liegt jedoch in der begrenzten Steuerungsmöglichkeit des Schaumbildungsprozesses. Die Reproduzierbarkeit und Gleichmäßigkeit direkter Schäumung der Suspension mit hohem Wassergehalt bleibt gering. Vor allem der Temperaturausgleich stellt bei großen Schaumkörpern ein Problem dar. Die zur Gasbildung notwendigen eingesetzten Nebenstoffe, z.B. Alkalien, Erdalkalien, Phosphate, etc. beeinflussen die Feuerfestigkeit, Druckerweichung und Thermoschockbeständigkeit nachteilig.

Des Weiteren besteht bei den nach den Verfahren des Standes der Technik hergestellten porösen Materialien die Gefahr der Rissbildung beim Formgebungs-, Trocknungs- oder Ausbrennprozess, was nachteilige Wirkungen auf die physikalischen Eigenschaften zur Folge hat. Außerdem sind die Stabilisierungsmöglichkeiten für die Rohmasse und damit die Einstellmöglichkeiten für die Porosität eingeschränkt.

Die Aufschäumung durch Verwendung von Metallpulvern bzw. -Pasten ist prinzipiell aus der Porenbetonindustrie bekannt. Die Schäumung bei der Porenbetonproduktion beruht auf der Reaktion der stark alkalischen Suspension (pH-Wert > 12) mit dem Al-Pulver (Paste), wobei Wasserstoff als Treibgas freigesetzt wird (siehe, "Das Porenbeton -Handbuch", Prof. Dr. Ing., Dr. h.c. Helmut Weber, Bauverlag GmbH, Wiesbaden, 1992).

DE 101 34 524 A1 offenbart ein Verfahren zur Herstellung einer Schaumkeramik mit gerichteter offener Porenstruktur. Das Verfahren erfolgt unter Verwendung von Metallpulver bzw. -Pasten und kann auch bei der Herstellung von keramischen Materialien bei niedrigen pH-Werten durchgeführt werden. Als Ausgangsstoffe zur Herstellung der Schaumkeramik unter Verwendung von Metallpulvern bzw. -Pasten werden übliche schlickerförmige Massen auf der Basis von Kaolin, Tonerde (α-Al₂O₃), und/oder Siliziumkarbid eingesetzt. Das Verfahren arbeitet mit einem anorganischen Material, einem Metallpulver, wobei in einer wässrigen, keramischen Suspension eine direkte Reaktion unter Gasbildung zwischen Kaolinit und dem Metallpulver bzw. -Paste abläuft. Für die Reaktion der Tonminerale (ohne und mit Zusatzstoffen) mit dem Metall liegt der pH-Wert der Masse etwa neutral bis pH 9. Die notwendigen Wassergehalte der Suspension aus oben genannten Komponenten liegen relativ hoch.

AT 233 851 offenbart ein Verfahren zur Herstellung von Formkörpern aus Carbiden und Nitriden des Siliziums, bei dem dem Ansatz hochdisperses γ-Al₂O₃ zu 1-10 Vol.-% zugesetzt wird. Das γ-Al₂O₃ wird dazu eingesetzt, die Temperatur und Zeitdauer der Sinterung zu reduzieren. Eine schlickerförmige Masse zur Erzeugung einer Porenkeramik durch Gießprozesse wird nicht verwendet. Das Gemisch der Ausgangssubstanzen wird angefeuchtet und dann unter Druck (1 t/cm²) zu Presslingen verformt und gebrannt.

Die oben genannten Verfahren eignen sich aber nicht zur Aufbereitung von gießfähigen Schlickermassen mit einer Viskosität, die sich normalerweise für Gießprozesse in poröse Formen (Gips) eignet. Die oben genannten Verfahren eignen sich auch nicht für Schlicker-Kemguß oder Druckguß von Formteilen. Somit entfällt die Möglichkeit zur maschinellen Fertigung von Formteilen aus oben genannten Massen.

Für die Fixierung der porösen Struktur während und nach der Gasentwicklung werden hauptsächlich die thixotropen Eigenschaften der Phyllosilikate ausgenutzt, was für eine Fertigung von größeren Steinen oder schnell ablaufenden maschinellen Fertigungen nicht immer ausreichend ist. Die üblichen Ausgangsstoffe Kaoline, Ton und α-Tonerde, verursachen zudem lange Austrocknungszeiten und hohe Schwindungswerte. Die üblichen, oben genannten Rohstoffe für die Gasbildung mit Metallpasten verlangen auch eine erhöhte Temperatur.

Für die Steuerung der Porenbildung und die Gewährleistung der Reproduzierbarkeit der Porenstruktur bei direkter Schäumung ist es wichtig, die notwendige Viskosität der Suspensionen mit möglichst niedrigen Wassergehalten einzustellen.

Andererseits trägt ein deutlicher Anteil der Phyllosilikate (Kaoline) in der Masse zur Glasphasenbildung im Sinterungsvorgang bei. Erhöhter Glasphasengehalt in feuerfesten Materialien wirkt sich aber nachteilig auf die Druckerweichung und auf die Thermoschockbeständigkeit aus.

Der vorliegenden Erfindung liegt somit die Aufgabe zugrunde, poröse keramische Materialien und Formteile und ein Verfahren zu deren Herstellung zur Verfügung zu stellen, bei denen die oben geschilderten Nachteile des Standes der Technik nicht auftreten. Insbesondere liegt der vorliegenden Erfindung die Aufgabe zugrunde, ein poröses keramisches Material bereitzustellen, das eine verbesserte Einstellbarkeit der Porenstruktur und verbesserte Eigenschaften bezüglich Druckerweichung und Thermoschockbeständigkeit aufweist. Eine weitere Aufgabe der Erfindung besteht darin, ein keramisches Material bereit zu stellen, das nach der Sinterung als nahezu Quarz- und Cristobalitfreies und glasphasenarmes Material mit orientierten Mulliten und Spinellen oder Tialiten vorliegt. Der vorliegenden Erfindung liegt darüber hinaus die Aufgabe zugrunde, ein Verfahren zur Herstellung von keramischen Formteilen bereit zu stellen, bei dem Schlickermassen mit einer Viskosität verwendet werden, wie sie für Gießprozesse in Verfahren wie z.B. Schlicker- Kemguß oder Druckguß von Formteilen benötigt wird. Eine noch weitere Aufgabe der Erfindung besteht darin, ein Verfahren zur Herstellung von keramischen Formteilen zur Verfügung zu stellen, das umweltfreundlich, durch direkte Schäumung der Suspension, ohne organische Ausbrennstoffe durchgeführt werden kann. Es ist eine zusätzliche Aufgabe der vorliegenden Erfindung ein Verfahren zur Herstellung von keramischen Formteilen bereitzustellen, das einen reduzierten Zeitbedarf bei der Porenbildung im Grünkörper, Trocknung und Sintervorgang mit sich bringt.

Diese Aufgaben werden durch den Gegenstand der unabhängigen Ansprüche gelöst. Bevorzugte Ausführungsformen der Erfindung sind in den abhängigen Ansprüchen dargelegt.

Die Lösung der oben genannten Aufgaben besteht in einem keramischen Material auf Aluminiumoxid-/silikatbasis, welches dadurch gekennzeichnet ist, dass für den Aufbau der rheologischen Eigenschaften im Schlickerzustand und für die Fixierung (Abbindung) der porösen Struktur während und nach der Gasentwicklung, Tonerde in γ-Al₂O₃ Form eingesetzt wird. Aluminiumoxid-/silikatbasis bedeutet hier, dass neben den obligaten Aluminiumoxidbestandteilen vorzugsweise auch Ausgangsstoffe auf Silikatbasis (z.B. Kaoline) eingesetzt werden.

Das erfindungsgemäße keramische Material zeichnet sich weiterhin dadurch aus, dass es nach der Sinterung ein nahezu Quarz- und Cristobalitfreies, als auch glasphasearmes Material mit orientierten Mulliten und Spinellen oder Tialiten bildet. Weitere vorteilhafte Eigenschaften des erfindungsgemäßen Keramikmaterials sind nachstehend angegeben.

Gemäß einem ersten Aspekt betrifft die Erfindung ein Verfahren zur Herstellung von keramischen Formteilen mit gradienter, offener oder geschlossener Porenstruktur, das die folgenden Schritte aufweist:
a) Herstellen einer schlickerförmigen Masse, die Wasser und Tonerde in γ-Al₂O₃ Form sowie zur Herstellung notwendige Zusatzstoffe umfasst,
b) Einstellen des pH der schlickerförmigen Masse auf Werte von 5 bis 10 und Vermischen der Masse in einem Temperaturbereich von Raumtemperatur bis 100 °C mit Metallpasten oder -pulvern, und
c) Einbringen des entstehenden Gemisches unter diesen Bedingungen in Formen, wobei poröse Formteile gebildet werden.

Die keramischen Materialien eignen sich auf Grund ihrer gerichteten, geschlossenen oder offenen Porenstruktur mit oder ohne Gradienten hervorragend zur Herstellung von feuerfesten Materialien und Brennhilfsmitteln, feuerfesten Leichtbauteilen, Formteilen sowie auch zur Herstellung von Filtermaterialien und Katalysatorträgern.

Durch Auswahl bestimmter Rohstoffe, d.h. insbesondere von Aluminiumoxid in γ-Al₂O₃ Form (oder Mischung von γ-Al₂O₃ und α-Al₂O₃), von Silikaten (Kaoline, Talk etc.), Titanoxid, Zirkonoxid etc. und durch Mischen mit für die Gasentwicklung notwendigen Metallpulvern bzw. -pasten und für die Herstellung notwendigen Zusatzstoffen wie z.B. Verflüssigern, Modifizierungsmitteln, Bindemitteln, die einen Porenbildungsprozess bei Temperaturen von Raumtemperatur bis 100 °C in der keramischen Masse ermöglichen, werden umweltfreundlich, durch direkte Schäumung der Suspension, ohne organische Ausbrennstoffe, Leichtsteine oder Formteile mit hohen Anwendungstemperaturen und offener Porosität hergestellt.

In einer bevorzugten Ausführungsform werden Titanoxid- und/oder Zirkonoxid als Zusatzstoffe eingesetzt.

Die Schäumung in Schritt c) kann in Formen mit Endmaßen oder in großen Blöcken, die später in die gewünschten Formate geschnitten werden, erfolgen. Die Formen können porös (saugfähig), bevorzugt jedoch nicht-porös sein.

In einer weiteren Ausführungsform werden als Metalle in den Metallpasten/- pulvern Al, Mg und/oder Ti verwendet. Vorzugsweise werden die Metalle Al und/oder Mg eingesetzt. Die Verwendung solcher Metallpulver bzw. -pasten zur Aufschäumung ist zwar prinzipiell auch für die Fertigung von geschäumten feuerfesten Steinen bekannt, ist bisher jedoch nicht für die Herstellung von geschäumten Keramik-Formteilen in Betracht gezogen worden, da sich die bis jetzt bekannten schlickerförmigen Keramik-Massen auf Basis von α-Tonerde aufgrund der Rheologie und Viskosität nicht zur Fertigung von Formteilen in porösen Formen (Gips) oder in nicht saugfähigen Formen eignen.

Besonders bevorzugt weisen die im erfindungsgemäßen Verfahren eingesetzten Metallpasten einen Metallgehalt von ungefähr 70-75 Masse% auf, es sind jedoch auch Metallgehalte ober- und unterhalb dieses Bereiches im erfindungsgemäßen Verfahren einsetzbar. Im Falle von Metallpasten handelt es sich vorzugsweise um Wasser- oder Glykolpasten. Der D₅₀ -Wert der Pulver oder Pasten liegt vorzugsweise in einem Bereich von 10 bis 200 µm.

Die erfindungsgemäß eingesetzte schlickerförmige Masse besteht aus Trockensubstanz und Wasser. Die Trockensubstanz (im Folgenden auch "Gesamttrockensubstanz" genannt) wiederum umfasst ein Gemisch aus Tonerde und wahlweise weiteren Bestandteilen, insbesondere Kaolin und der zusätzlichen, oben genannten Bestandteile. Die Tonerde umfasst γ-Al₂O₃ und kann zusätzlich α-Al₂O₃ umfassen (nähere Erläuterungen siehe auch unten).

In einer besonders bevorzugten Ausführungsform wird γ-Al₂O₃ in einem Anteil von wenigstens 30 Masse% bezogen auf die Gesamtmasse an Tonerde eingesetzt. Der restliche Anteil der Tonerde kann aus α-Al₂O₃ bestehen. Der Anteil an γ-Al₂O₃ ist nach oben hin nicht beschränkt und kann auch 100 Masse% bezogen auf die Gesamtmenge an Tonerde betragen.

Die in der schlickerförmigen Masse eingesetzte Gesamttrockensubstanz besteht vorzugsweise aus einem Anteil von wenigstens einem Drittel Tonerde, bezogen auf die Masse. Die restlichen zwei Drittel werden durch weitere Bestandteile gebildet, in erster Linie Kaolin. Insofern ergibt sich ein Mindestgehalt von 10 Masse% γ-Al₂O₃ in der Gesamttrockensubstanz.

Es ist auch denkbar, dass die Trockensubstanz alleine aus Tonerde besteht, wobei der Anteil von γ-Al₂O₃ in diesem Fall auf max. 90 Masse% beschränkt ist. Falls der Anteil an γ-Al₂O₃ diese Menge überschreitet, tritt keine ausreichende Verfestigung des Formkörpers ein. Andererseits sollte der Mindestgehalt von 10 Masse% γ-Al₂O₃ in der Gesamttrockensubstanz nicht unterschritten werden, da dann die erfindungsgemäßen Vorteile (insbesondere die vorteilhafte Viskosität) nicht mehr erreicht werden können.

Die Trockensubstanz enthält folglich erfindungsgemäß einen Anteil von 10-90 Masse% γ-Al₂O₃

Es hat sich herausgestellt, dass die oben genannten Aufgaben besonders gut gelöst werden, wenn ein Masseverhältnis von 2/3 Tonerde zu 1/3 Kaolin in der Gesamttrockensubstanz eingesetzt wird, wobei der Anteil an γ-Al₂O₃ in der Tonerde ungefähr 80 Masse% beträgt. Der Rest besteht aus α-Al₂O₃.

Das erfindungsgemäße Herstellungsverfahren kann in einem zusätzlichen Schritt das Trocknen und Brennen der Formteile bei Temperaturen von 900°C bis 1.800°C umfassen. Das Brennen erfolgt je nach Anwendungsklasse der Produkte und kann bei Bedarf auch außerhalb des oben genannten Bereiches liegen, z.B. höher als 1.800°C.

Als Ausgangsrohstoffe zur Herstellung der erfindungsgemäßen keramischen Materialien werden - wie oben angesprochen - vorzugsweise schlickerförmige Massen auf Aluminiumoxid-/silikatbasis und wahlweise Titanoxid- und/oder Zirkonoxidbasis eingesetzt, beispielsweise Massen auf Basis von γ- Tonerde, Kaolin und/oder Titanoxid und/oder Zirkonoxid.

Die γ-Tonerde wird vorzugsweise mit einer Korngröße in einem Bereich 50 bis 200 µm und mit einer Oberfläche (nach BET) von 60-220 m³/g eingesetzt. Es sind jedoch auch kleinere und größere Korngrößen denkbar.

Je nach Bedarf enthalten die schlickerförmigen Massen Verflüssiger (Polyelektrolyte), Modifizierungsmittel und Bindemittel, die vorzugsweise frei von Alkalien und Phosphaten sein sollten. Alle Massenkomponenten werden vorzugsweise mit etwa 25-40 Masse% Wasser bis zu einer gleichmäßigen Konsistenz vermischt. Es sind jedoch auch niedrigere Wasseranteile denkbar, z.B. erwies sich bei Verwendung reiner Tonerde (ohne Ausgangsprodukte auf Silikatbasis wie z.B. Kaolin) ein Wasseranteil von nur 20 Masse% oder weniger als ausreichend, um eine schlickerförmige Masse mit den gewünschten Eigenschaften herzustellen. In die schlickerförmigen Massen werden dann die Metallpulver und/oder Pasten eingemischt und bei Raumtemperatur bzw. Temperaturen bis 100 °C und pH Werten von 5 bis 10, vorzugsweise von 7 bis 10 homogenisiert. Es ist möglich, vor dem Gießen in die Formen eine Anlaufzeit einzuhalten, um die Gasentwicklung und das folgende Ansteifen des Grünlings in gewünschten Grenzen einzustellen.

Je nach Bedarf enthalten die schlickerformigen Massen disperse oder nanodisperse anorganische Zusatzstoffe wie stabiles/instabiles ZrO₂, ZrSiO₄, TiO₂, welche im Weiteren zur Bildung von orientierten Tialiten- und Zirkonoxiden kommen.

Der Einsatz des γ-Al₂O₃ verursacht im Gegensatz zu den im Stand der Technik offenbarten Verfahren die Gasbildungsreaktion mit Metallpulver bzw. -paste bereits bei Raumtemperatur. Das ermöglicht, Gips als Formenmaterial einzusetzen. Bei einer Fertigung der Formteile in saugfähigen Formen läuft die Porenbildung unter Änderung des Wassergehalts der Gießmasse in den Formen ab, wobei sich eine gradiente Porenverteilung im Querschnitt des Formteils bildet. Der Schäumungs-Prozess und die Fixierung der Schaumstruktur läuft also in den Formen unter zusätzlicher Verwendung von Verflüssigern, Modifizierungmitteln und/oder Bindemitteln bei Raumtemperatur oder Temperaturen bis 100 °C ab.

Ein Vorteil des erfindungsgemäßen Verfahrens besteht darin, dass bei der Bildung der Porenstruktur die Gesamtporosität und die Porenverteilung innerhalb von großen Grenzen einstellbar sind, d.h. 1-500 µm, und dass eine offene oder geschlossene Porenstruktur erhältlich ist. Neben der Makroporosität ist zudem auch eine Mikroporenbildung im Bereich von wenigen nm bis 1 µm erhältlich. Das γ-Al₂O₃ in der Versatzmasse wirkt überraschenderweise selbst als Verflüssiger und senkt deutlich die notwendigen Wassergehalte als auch die Viskosität der Suspension. Zudem trägt die hohe innere Oberfläche zur Porositätssteigerung der hergestellten Porenkeramik bei. Agglomerate der Tonerde tragen zudem zum Aufbau der porösen Stützstruktur, d.h. der Porenwände, bei.

Die unerwartete Verbesserung der rheologischen Eigenschaften der Masse auf Basis der γ-Tonerde eröffnet die Möglichkeit zur direkten Fertigung feuerfester Leichtteile durch Gießprozesse in poröse Formen. Die Einstellbarkeit der Parameter der Masse bietet die Möglichkeit zur maschinellen Fertigung von feuerfesten Formteilen und jeder gewünschten Filterform oder Katalysatorträgerform.

Der Einsatz von γ-Al₂O₃ in Massen für direkte Schäumung mit Metallpulvern, bzw. -pasten trägt weitgehend zur Stabilisierung (Fixierung) der Schaumstruktur während und nach der Gasentwicklung bei. Es verbessert auch die Steuerungsmöglichkeiten der Schaumbildung in wässriger Suspension. Der Einsatz von γ-Al₂O₃ in der Masse vermeidet das sogenannte "Zurückfallen" des Schaums, was sonst bei der Technologie der mit Metallpulver bzw. - pasten geschäumten Materialien häufig beobachtet werden kann. Eine Masse auf Basis von γ-Tonerde oder einer Mischung aus γ- und α-Tonerde, führt ferner zu niedrigen Werten der Trocken- und Brennschwindung.

Der Einsatz von γ-Tonerde beschleunigt die Porenbildung bei Raumtemperatur bzw. leicht höheren Temperaturen bis 100°C und trägt zur Bildung von Schaumkeramiken mit geringer Rohdichte bei, von z.B. etwa 0,25 bis 1,0 g/cm². Es ist weitgehend möglich durch Einsatz der γ-Tonerde und dazu geeigneten Metallpasten ohne und mit Zusatzstoffen den Abbindungsprozess und Fixierung der Schaumstruktur zu Grünkörper einzustellen. Dies ermöglicht die Entformung der Formteile nach sehr kurzer Zeit, je nach der Größe des Formteils.

Die Ausrichtung der Porenstruktur erfolgt vorzugsweise durch den Einsatz von texturierten Füllstoffen, wie z.B. Plättchen, Stäbchen etc. Die Porenausrichtung und Bildung von Gradientenstrukturen wird auch durch die Porosität des Formmaterials beeinflusst und kann gesteuert werden.

Auf Grund der Oberflächenaktivität des γ-Al₂O₃ wird die Kontaktbildung zwischen den Masseteilchen günstig beeinflusst und dadurch eine höhere Grünlingsfestigkeit gesichert. Beim Sinterprozess beschleunigt die γ-Tonerde die Phasenbildung und verringert durch Reaktion mit der freigesetzten Kieselsäure in der Mullit- und Spinell-Bildung deutlich den restlichen Glasphasengehalt in diesen Schaumkeramiken. Es kommt zur Bildung von Mullit-gebundenen α-Korund-Materialien.

Als Folge steigert sich sowohl die Feuerfestigkeit, als auch die Thermoschockbeständigkeit und Korrosionsbeständigkeit der feuerfesten Leichtsteine und Formteile. Nach dem Sintern erhält man ein (nahezu) Quarz- und Cristobalit-freies als auch glasphasearmes Feuerfestmaterial mit verlängerter Lebensdauer.

Im Falle der TiO₂-Zugabe kommt es zur Tialit-Bildung. Durch die Bildung von Tialiten wird deutlich der thermische Ausdehnungskoeffizient der gesinterten Materialien verringert, was eine Voraussetzung für die Steigerung der Thermoschockbeständigkeit bildet.

Die nach dem Verfahren hergestellten Keramiken weisen eine gute Gaspermeabilität senkrecht oder auch wagrecht zur Treibrichtung auf.

Die erfindungsgemäß erzielten Vorteile des Einsatzes von γ-Tonerde sind in Hinblick auf dessen bislang bekannte Eigenschaften unerwartet. Durch ihre Eigenschaft als fehlgeordneter Spinell gilt γ-Tonerde als in der Keramikherstellung kaum kontrollierbar. Zudem gilt die während der Sinterung einhergehende Volumenänderung des Formkörpers (Umwandlung von kubisch/tetragonal zu hexagonal) als problematisch. Es hat sich demgegenüber jedoch herausgestellt, dass γ-Tonerde hervorragend für den Einsatz zur Herstellung von Porenkeramiken geeignet ist.

Das erfindungsgemäße Verfahren arbeitet mit einem anorganischen Material, einem Metallpulver bzw. einer Metallpaste, wobei in einer wässrigen keramischen Masse eine direkte Reaktion unter Gasbildung zwischen der γ-Tonerde und dem Metallpulver (z.B. Aluminium) abläuft. Im Weiteren beteiligen sich die eingesetzten Metallpulver an der Stabilisierung der Schaumstruktur des Grünlings durch Bildung z.B. von Aluminiumhydroxiden und tragen ferner auch zur Festigkeitssteigerung durch Bildung von sekundärem Mullit beim Sintern bei.

Zusätzlich treten keinerlei Umweltprobleme auf, wie es beim Ausbrennen organischer Bestandteile im Stand der Technik der Fall ist. Zudem wird die Bildung von toxischem Cristobalit vermieden.

Für die Reaktion der γ-Tonerde oder einer Mischung von α- und γ- Tonerde (ohne und mit Zusatzstoffen) mit dem Metall liegt der pH Wert der Masse etwa leicht sauer bis neutral bis pH ≈ 9. Die eingesetzte Menge an Paste ist ebenfalls niedrig, z.B. nur 0,1 bis 5,0 Masse%, bezogen auf die Trockenmasse. Für die Fixierung der porösen Struktur während und nach der Gasentwicklung sorgen die Reaktionsprodukte der Umbildung der Metalle (z.B. Aluminiumhydroxide) und die Oberflächeneigenschaften der γ-Al₂O₃ ohne oder mit Verflüssiger und Modifizierungsmittel.

Beim Sintern der Schaumkörper besteht ferner die Möglichkeit der Bildung von kristallinen Sekundärphasen, z.B. Sekundärmullit, Tialit, bei niedrigeren Temperaturen.

Der Porenbildungsprozess läuft bei Raumtemperatur ab, je nach Masseversatz, innerhalb etwa 5 bis 60 Minuten. Der dadurch entstandene poröse Grünkörper lässt sich bei Verwendung einer saugfähigen Form nach etwa 15-30 min. entformen, oder als in Form gegossene große Blocks oder Platten konventionell trocknen. Das getrocknete Material wird dann bei ausgewählten Temperaturen zwischen 900°C und 1.800°C oder höher, je nach Zusammensetzung und gewünschter Einsatztemperatur, gesintert.

Insofern betrifft die vorliegende Erfindung in einem zweiten Aspekt ein keramisches Formteil, das durch ein wie vorstehend beschriebenes Verfahren herstellbar ist.

Die Erfindung betrifft insbesondere ein keramisches Material auf Aluminiumoxid- und wahlweise Silikatbasis mit gerichteter offener oder geschlossener Porenstruktur, bei dem in der schlickerförmigen Masse zur Herstellung des Materials γ-Al₂O₃ eingesetzt wird.

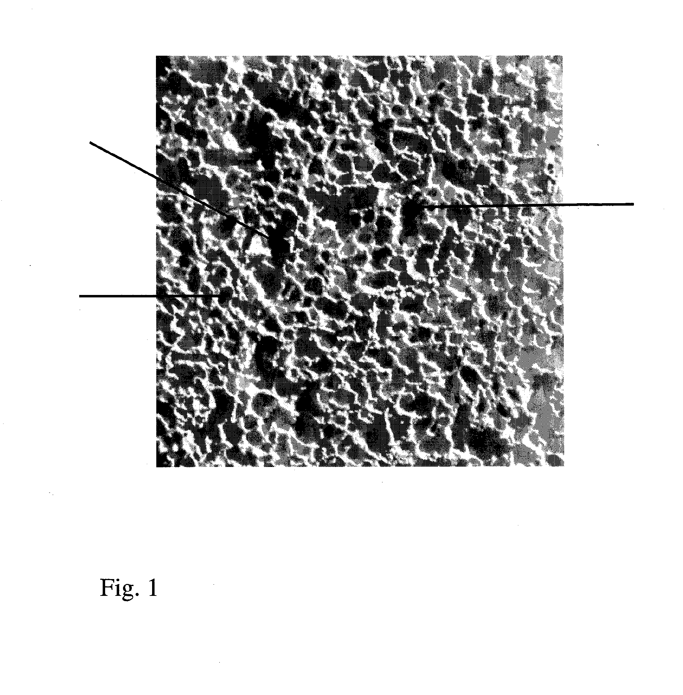

Das erfindungsgemäße keramische Material weist, bedingt durch sein Herstellungsverfahren, eine spezielle Porenstruktur auf, wie sie bei herkömmlichen Porenkeramiken nicht zu finden ist. Bedingt durch die niedrige Viskosität, die durch den Einsatz von γ-Al₂O₃ in der schlickerförmigen Masse erzielt wird kommt es im Zusammenhang mit der Gasbildung durch Metallpasten/Pulver zur Ausbildung von Poren, die durch kleine Kanäle oder auch "Durchschüsse" miteinander verbunden sind. Letztere entstehen - ohne an eine Theorie gebunden sein zu wollen - vermutlich durch aufsteigendes H₂-Gas, das während des Verfahrens gebildet wird. Die in Figur 1 gezeigte Fotografie zeigt diese Porenstruktur sehr deutlich: in den einzelnen Poren zeigen sich kleinere Öffnungen, Durchschüsse, die wiederum mit anderen Poren in Verbindung stehen. Hierdurch entsteht im Vergleich zu anderen Porenkeramiken eine besonders verbesserte Gaspermeabilität.

Wie bereits oben ausgeführt handelt es sich dabei vorzugsweise um ein keramisches Material, das während der Sinterung ein nahezu Quarz- und Cristobalit-freies und glasphasearmes Material mit orientierten Mulliten, Spinellen und Tialiten bildet.

In einem weiteren Aspekt betrifft die Erfindung die Verwendung des wie oben offenbarten keramischen Materials zur Fertigung von feuerfesten Materialien und Brennhilfsmitteln, feuerfesten Leichtbauteilen, Formteilen sowie zur Herstellung von Filtermaterialien und Katalysatorträgern.

Weiterhin betrifft die vorliegende Erfindung die Verwendung von schlickerförmigen Massen auf Aluminiumoxid- und wahlweise Silikatbasis unter Verwendung von Tonerde in γ-Al₂O₃ Form in der Herstellung von keramischen Formteilen.

Die vorliegende Erfindung wird nun anhand der unten angegebenen Beispiele und der Figuren veranschaulicht. Die Beispiele sind zu Illustrationszwecken angegeben und sollen die Erfindung nicht einschränken.

Figur 1 zeigt eine lichtmikroskopische Aufnahme der Porenstruktur einer erfindungsgemäßen Porenkeramik. Die Pfeile weisen auf Durchschüsse in den Poren hin. Originalbildbreite der Porenkeramik: etwa 4 cm; gebrannt bei 1500°C, Rohdichte 0,36 [g/cm³], Verhältnis Kaolin : γ-Al₂O₃ = 1 : 2.

Figuren 2 A und B zeigen die Eigenschaften von γ-Aluminiumoxid gegenüber α-Aluminiumoxid.

### Beispiele:

### Beispiel 1:

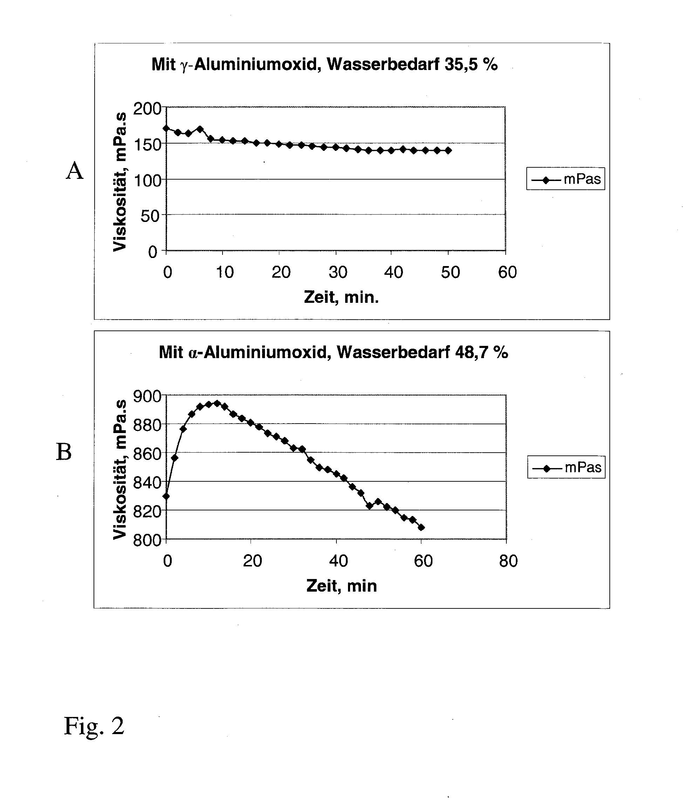

Im Folgenden werden die überraschenden Eigenschaften von γ-Aluminiumoxid gegenüber α-Aluminiumoxid dargestellt:
Die Ergebnisse eines Vergleichsbeispiels der Viskosität und Trocknungseigenschaften sind in den Figuren 2 A und B dargestellt.
Trockenmasse-Zusammensetzung: Kaolin 50 %, Tonerde 50 %, Al Paste 0,1 %. Bei der Tonerde handelt es sich entweder um reines γ-Al₂O₃ oder α-Al₂O₃.
Der pH der schlickerförmigen Masse beträgt 9,65.

| **Charakteristik** | γ-Al₂O₃ | α-Al₂O₃ |
|---|---|---|
| Wasserbedarf für Dispergieren (bezogen auf Gesamtmasse), % | 35,5 | 48,7 |
| Viskosität, mPa.s | 150 | 890 |
| Zeitbedarf für Trocknung (60°C), h | 16 | 72 |
| Trocknungs-Rissbildung | Keine | Ja |
| Gesamtschwindung nach 1600°C, % | 10,9 | 22,7 |
| Rohdichte nach 1600°C, g/cm³ | 1,19 | 1,48 |

### Beispiel 2:

Eine Zusammensetzung aus Kaolin 33,3 Masse% und Tonerde in γ-Form 66,6 Masse% wird mit Wasser gemischt und homogenisiert. Der Wasserbedarf beträgt 42 Masse% (bezogen auf die Gesamttrockenmasse). Der pH der schlickerförmigen Masse beträgt 9,10.

Anschließend wird 0,1 Masse% Aluminium-Paste zugemischt und etwa 5-10 min. homogenisiert. Die schlickerförmige Masse wird in eine offene Form gegossen. Der Porenbildungsprozess beträgt etwa 20-60 min. bei Raumtemperatur. Erhöhte Temperaturen von 50-60 °C sind möglich. Nach Austrocknung wird das keramische Material ausgeformt und bei 1700 °C in einem Elektromuffelofen gesintert.

| Folgende Eigenschaften werden erzielt: | |
|---|---|
| Rohdichte | 1,14 g/cm³, |
| Porosität | 62 %, |
| Biegefestigkeit | 4,2 N/mm², |
| Gesamtschwindung | 12,5 %, |
| Mittlere Porengröße | 11,3 µm (Hg-Porosimetrie) |

### Beispiel 3:

| Masse-Zusammensetzung (Masse%): | |
|---|---|
| Kaolin | 33,3 % |
| Tonerde in γ-Form | 66,6 % |
| Aluminium-Paste | 0,1 % |
| Wasser (bezogen auf Trockenmasse) | 39,0 % |

| Eigenschaften: | |
|---|---|
| Rohdichte nach Sintern 1750°C (Haltezeit 1 h) | 0,95 g/cm^{3,} |
| Porosität | 74 %, |
| Biegefestigkeit | 3,9 N/mm², |
| Gesamtschwindung | 8,0 %, |

Der pH der schlickerförmigen Masse beträgt 9,40.

### Beispiel 4:

| Masse-Zusammensetzung (Masse%): | |
|---|---|
| Kaolin | 32,6 % |
| Tonerde in γ-Form | 55,0 % |
| Tonerde in α-Form | 10,3 % |
| ZrO₂ (MgPSZ) | 2,0 % |
| Aluminium-Paste | 0,1 % |
| Wasser (bezogen auf Trockenmasse) | 42,0 % |

| Eigenschaften nach Sinterung 1700°C (Haltezeit 1 h): | |
|---|---|
| Rohdichte | 1,17 g/cm³, |
| Gesamtschwindung | 16,0 %, |
| Biegefestigkeit | 7,66 N/mm², |
| Porosität | 46,0 %, |
| Mittlere Porengröße | 10,1 µm. |

Der pH der schlickerförmigen Masse beträgt 9,45.

### Beispiel 5:

| Masse-Zusammensetzung (Masse%) | |
|---|---|
| Tonerde in γ-Form | 37,5 % |
| Tonerde in α-Form | 62,2 % |
| Binder (als 1% Wasserlösung) | 0,2 % |
| Aluminium-Paste | 0,1 % |
| Wasser (bezogen auf Trockenmasse) | 44,0 % |

| Eigenschaften nach Sinterung 1700 °C (Haltezeit 1 h): | |
|---|---|
| Rohdichte | 1,20 g/cm³, |
| Biegefestigkeit | 8,6 N/mm², |
| Porosität | 58,5 %, |
| Gesamtschwindung | 11,0% |
| Mittlere Porengröße | 12,8 µm |

## Patentansprüche

1. Verfahren zur Herstellung von keramischen Formteilen mit gradienter, offener oder geschlossener Porenstruktur, wobei das Verfahren folgende Schritte umfasst:
a) Herstellen einer schlickerförmigen Masse, die Wasser und Tonerde in γ-Al₂O₃ Form sowie zur Herstellung notwendige Zusatzstoffe umfasst,
b) Einstellen des pH der schlickerförmigen Masse auf Werte von 5 bis 10 und Vermischen der Masse in einem Temperaturbereich von Raumtemperatur bis 100 °C mit Metallpasten oder -pulvern, und
c) Einbringen des entstehenden Gemisches unter diesen Bedingungen in Formen, wobei poröse Formteile gebildet werden.

2. Verfahren nach Anspruch 1, wobei die Zusatzstoffe aus Verflüssigungs-, Modifizierungs-, Bindemitteln, Titanoxid- und/oder Zirkonoxid ausgewählt sind.

3. Verfahren nach Anspruch 1 oder 2, wobei die schlickerförmige Masse weiterhin Tonerde in α-Al₂O₃ Form und/oder Rohstoffe auf Silikatbasis, vorzugsweise Kaoline, umfasst.

4. Verfahren nach Anspruch 1 - 3, wobei als Metalle in den Metallpasten/- pulvern Al, Mg und/oder Ti verwendet werden.

5. Verfahren nach Anspruch 4, wobei die Metallpasten einen Metallgehalt von ungefähr 70-75 Masse% aufweisen.

6. Verfahren nach einem oder mehreren der vorhergehenden Ansprüche, wobei die in der schlickerförmigen Masse enthaltene Trockensubstanz 10-90 Masse% γ-Al₂O₃ aufweist.

7. Verfahren nach einem oder mehreren der vorhergehenden Ansprüche, wobei zur Herstellung der schlickerförmigen Masse Gemische aus γ-Al₂O₃ und γ-Al₂O₃ eingesetzt werden.

8. Verfahren nach Anspruch 7, wobei γ-Al₂O₃ in dem Gemisch wenigstens 1/3, bezogen auf die Masse, ausmacht.

9. Verfahren nach einem oder mehreren der vorhergehenden Ansprüche, bei dem in einem zusätzlichen Schritt das aufgeschäumte keramische Material getrocknet und bei Temperaturen von 900°C bis 1.800°C gebrannt wird.

10. Verfahren nach einem oder mehreren der vorhergehenden Ansprüche, wobei die schlickerförmige Masse Kaolin und γ-Al₂O₃ umfasst.

11. Verfahren nach einem oder mehreren der vorhergehenden Ansprüche, wobei die schlickerförmige Masse einen Wasseranteil von 25-40 Masse% aufweist.

12. Keramisches Formteil, das durch ein Verfahren nach einem oder mehreren der vorhergehenden Ansprüche herstellbar ist.

13. Keramisches Material mit gerichteter offener oder geschlossener Porenstruktur, **dadurch gekennzeichnet, dass** die schlickerförmige Masse zur Herstellung des Materials γ-Al₂O₃ umfasst.

14. Verwendung des keramischen Materials nach Anspruch 13 zur Fertigung von feuerfesten Materialien und Brennhilfsmitteln, feuerfesten Leichtbauteilen, Formteilen sowie zur Herstellung von Filtermaterialien und Katalysatorträgern.

15. Verwendung von schlickerförmigen Massen, die Tonerde in γ-Al₂O₃ Form umfassen, in der Herstellung von keramischen Formteilen.
